# EUROPEAN PATENT SPECIFICATION

(11) **EP 0 543 863 B1**
(45) Date of publication and mention of the grant of the patent: **23.11.1994**
(21) Application number: 91914377.6
(22) Date of filing: 13.08.1991
(51) Int. Cl.: B26D 9/00, B26F 3/00

(54) **PROCESS FOR PRODUCING SELF-ADHESIVE SHEET MATERIALS**
VERFAHREN ZUR HERSTELLUNG VON SELBSTKLEBEFOLIEN
PROCEDE DESTINE A FABRIQUER DES MATERIAUX EN FEUILLES AUTOCOLLANTES

(30) Priority: 14.08.1990 GB 9017843
(43) Date of publication of application: 02.06.1993
(73) Proprietor: FORBO-CP LIMITED, Cramlington, Northumberland NE23 8AQ (GB)
(72) Inventor: WARWICK, Peter 22 Dale Road West Monkseaton, Tyne and Wear NE25 8NP (GB); ARKELL, Philip, Bedlington Northumberland NE22 7CU (GB)
(74) Representative: Jones, Helen Marjorie Meredith
(86) International application number: GB9101373
(87) International publication number: WO9203264

(56) References cited:
- EP-A- 0 246 656
- FR-A- 1 238 852
- US-A- 3 892 901
- US-A- 3 904 097
- US-A- 4 312 686

## Description

The present invention relates to a process for producing self-adhesive sheet materials primarily for use in interior decorating, in particular to a process for producing a roll of such material having a scalloped or non-linear border.

Process are known in which laminates of sheet material carrying a pressure-sensitive coating covered by a release sheet are cut to form labels, by cutting through the material carrying the pressure-sensitive coating without cutting through the release sheet. The waste material around the product labels may be left on the release sheet or may be stripped therefrom. Labels produced by these known processes consist of short areas of the laminate which are cut around completely in the operation.

Processes are known in which a continuous web, comprising a laminate of a sheet substrate carrying on one surface a coating of pressure-sensitive adhesive and a release sheet covering the adhesive coating, is slit in the machine direction to provide several narrower parallel strips. The broad strip of laminate may be slit by severing through the entire thickness of the laminate and winding the parallel product rolls separately to the desired length. Alternatively it may often be more convenient to perforate the laminate so that it is perforated along the line dividing the product strips, but allowing it to be handled as a single strip during rolling into product rolls of the desired length. The product rolls may then be snapped along the perforations to separate the product roll into the rolls of product strips of the desired width.

US-A-3 892 901, which is considered to be the nearest prior art, describes a process for converting a laminate material comprising a sheet material with pressure sensitive adhesive coated on one surface carried on a release sheet. The laminate is die cut, to cut through the sheet material only to form labels and is slit in the machine direction and in the cross direction through the entire laminate. In one embodiment the laminate is perforated in a cross direction to allow it to be fan-folded, this document does not show a process in which the laminate is severed through its entire thickness and reeled off to form product rolls.

In a process according to the invention a continuous web, comprising a laminate of a) a sheet substrate carrying on one surface a coating of pressure-sensitive adhesive and b) a release sheet covering the adhesive coating, is subjected to a cutting operation in which the substrate is cut through with a die without cutting through the underlying release sheet, to form a product strip which is continuous in the machine direction and is characterised in that the surface of the sheet material opposite to the surface carrying the adhesive carries a decorative pattern and the border of the strip which is cut in the cutting operation is non-rectilinear and is in register with the boundary of the decorative pattern provided on the sheet surface and in that after the die cutting operation the laminated strip is severed in the cross direction through its entire thickness and reeled off to form product rolls.

Generally the cutting operation divides the substrate into a waste strip and a strip of desired product material, each being continuous in the machine direction. It may be convenient after the cutting operation and before the cross direction severing of the web into product roll lengths, to remove the waste material by stripping it off the release paper and discarding it. Alternatively the waste material may be retained as part of the laminate in the product roll and discarded by the consumer together with the release sheet. Sometimes it may be convenient to print promotional information or instructions for use on the waste material.

The process is of particular utility for providing decorative strips, in particular for interior decorations, for instance for applying to walls, ceilings, doors, window frames or furniture. The surface of the sheet material opposite to the adhesive surface carries a decorative pattern, which is generally provided by printing onto the continuous laminate in a continuous printing process. The process may comprise in-line printing, followed by cutting steps. Alternatively printing may be carried out at an earlier station or on a separate line altogether, with the cutting controlled by registration marks printed onto the material. The printing may be carried out by conventional continuous printing processes such as gravure, rotary letter press or rotary screen printing techniques.

The substrate used in the process may be a single material or a laminate of several layers. It may comprise paper, non-woven, woven or knitted fabrics and/or flexible plastic films and foils. A preferred substrate is a foil or film of a synthetic polymer, for example of a polyester, or, preferably of a thermoplastic resin such as a polyolefin or a vinyl polymer. A preferred substrate comprises a vinyl chloride polymer, for example a homopolymer of vinyl chloride. Such films or foils are advantageously supported during at least part of the process by laminating the film or foil to a support web in a conventional manner. The support web may be permanently laminated to the film and thus comprise part of the substrate and be retained in the product or it may be stripped from the product after part or all of the process. A release sheet as described above applied to an adhesive coating may act as the support web in the process of the invention. In a particularly preferred embodiment of the invention a commercially available laminate consisting of a self-adhesive thermoplastic resin film carrying a release sheet, for example sold under the trade marks "Fablon" or "Con-Tact", is used.

Suitable pressure-sensitive adhesives are polyvinylether-based adhesives or, preferably, acrylic adhesives, for example based on acrylic esters, for example comprising units derived from one or more C₁₋₈-alkyl(meth)acrylate esters. Where the substrate is a plasticised polymer and the laminate is subjected to a heating operation to cure a film it is sometimes found that the plasticiser migrates during the processing at raised temperatures, and may affect the adhesive, e.g. may soften it, which can be undesirable. When the substrate comprises plasticised polyvinyl chloride, the adhesive is preferably an acrylic-based adhesive.

The decorative pattern on the material may include profiling, that is 3-dimensional effects, provided by expandable inks and/or embossing techniques. The decorative surface may also be provided with other curable coatings, for instance protective coatings. A foamable or other curable coating is generally cured by heating the coating on the material. In the present process the curing step may be carried out before the cutting operation, but is usually carried out after the cutting operation, by passing the product laminate through a curing station. The process thus preferably utilises the techniques described in EP-A-0,246,656. The curable material may comprise any of those disclosed in that reference.

The curable material usually contains a polymer which is curable at a raised temperature. The polymer may be one which is cured by being cross-linked, e.g. to render a soluble polymer solid and insoluble in the liquid vehicle of the material, or may be in the form of a dispersion or plastisol in the curable material, which forms a continuous solid phase on heating. These types of materials give a limited profiled effect to the substrate. For example the material may comprise a plastisol of a vinyl polymer, generally a vinyl chloride polymer and preferably a homopolymer of vinyl chloride. A plastisol comprises plasticiser for example a phthalate-type plasticiser. Other suitable materials comprise water-based acrylic emulsion materials. The curable material optionally comprises conventional stabilisers, fire retardants, anti-oxidants, fillers, pigments, dyes, viscosity modifiers, etc.

Preferably the curable material is foamable, so that heating the substrate carrying the material causes it to foam. Using such materials a higher profiled effect may be achieved. Such foamable materials, generally comprise a basic curable material of the same type described above including the optional components together with a foaming agent. The foaming agent may be a chemical foaming agent or a physical foaming agent. Chemical foaming agents are widely used for forming floor covering compositions e.g. as in GB 1069998. A commercially available chemical foaming agent is for instance azodicarbonamide. Such agents are preferred for use in foamable plastisols. Physical foaming agents generally comprise micro-spheres of a thermoplastic material which contains a volatile liquid. On heating these micro-spheres the shell softens and the volatile material volatilises to expand the shell of the micro-spheres. The expanded thermoplastic shell hardens on cooling. Such foaming agents are preferred for use in water-based acrylic emulsion foamable materials.

The blow ratio of the foamable material, i.e. the ratio of the volumes before and after foaming, is chosen to give the desired softness and durability to the final product as well as the desired profile depth. Usually the blow ratio is between 1:2 and 1:20, preferably between 1:3 and 1:10.

The profile depth of a profiled product is usually at least 1mm, more often at least 2mm and sometimes greater than 5mm, for example up to 10mm or even 15mm, sometimes the profile depth of the product is as low as 0.1mm, especially when the curable material is not foamable.

The curable material may be applied by conventional techniques at coating weights in the range 5 to 500 g/m², preferably 50 to 200 g/m², depending on print area and profile depth required. It is generally required that the material in the final product form a decorative pattern. The material may be applied discontinuously in the desired pattern for example by rotary screen printing. A foamable material may sometimes be applied over the whole surface of the substrate, for example by coating or printing a continuous layer. In either case further decorative features may be applied in known manner to a foamable material e.g. by the subsequent moulding of the foamed or unfoamed material. Preferably activators and/or inhibitors for chemical foaming agents in the foamable material may be applied over parts of the foamable coating for example as described in GB-A-1,069,998. Activators are for example potassium or zinc octoates. Inhibitors are for example trimellitic anhydride and benztriazole. The vehicles in which such activators or inhibitors may be contained may also act as decorative inks and thus may contain dyes and/or pigments to apply surface decoration to the final product.

A decorative surface may additionally, or alternatively, be provided by discontinuous printing of one or a plurality of differently coloured curable compositions onto the substrate, which may also be coloured. These methods produce "self-coloured" products which do not require further painting to give the desired coloured effects.

The decorated surface may have one or more top coatings, for example applied over the curable material e.g. before curing, so that the curing step also dries the coating. For example a transparent coating may be applied as a protective wear layer for the product.

The conditions in the curing step of the process depend on the nature of the curable material and any foaming agent, but is more than 140°C. Curing of a plastisol with or without a chemical foaming agent generally requires heating the coated substrate to a temperature of at least 150°, usually at least 180° and sometimes over 200°C for a period of time greater than 20 seconds, usually less than 1 minute but sometimes more than 2 minutes and as much as 5 minutes, to cure and, if desired, foam the curable material. Water-based acrylic foamable materials are generally heated to a temperature in the range 140°C-160°C, for example about 140°C for a period of time in the range 1-60 secs.

The process is of particular utility in providing products comprising a relatively narrow strip of material. It is convenient, when producing such products, to carry out any decorative printing, curing, cutting and piece winding operations on a strip of laminate material comprising several parallel product widths. The separate product rolls are preferably separated from one another at a final stage of the processing, for instance after the piece winding operation. In order to allow a laminate comprising several widths of product material to be processed, the separate products strips are usually perforated in line in a final stage of the process, usually after the cutting operation and any curing step. The perforating process allows the material to be handled as a single width, but allows a piece-wound roll of product comprising several parallel, perforated strips, to be separated by snapping the roll at the perforations, by machine or by hand. The laminate may be perforated by cutting through either the sheet material or the release sheet completely in the machine direction along the line separating the two product strips, with the other of the sheet material and release sheet being perforated, that is provided with intermittent cuts through its entire thickness. The nature of the materials of the laminate will determine whether either or both are to be perforated. Any plastics material is generally cut through its entire thickness, since a perforated substrate of such material would, in general, not be susceptible to yielding to give a clean break on tearing by this type of operation. The perforation and die-cutting can be carried out simultaneously at the same station on a line or may be carried out separately, with the perforation step usually being after the die-cutting step.

In the present process it is particularly advantageous that the release sheet of the laminate in the product strip has two linear borders. The strip of sheet material itself may have one or both of its borders which are non-linear. In such products, the provision of a release material strip, having parallel and linear borders, is beneficial since it facilitates the product winding and optional subsequent separation into narrower widths by snapping at perforations provided for the purpose.

The product may be used as a decorative border or frieze for use on walls or ceilings, or as trim for furniture, picture rails, door, window or picture frames and other decorative borders. Suitable widths for the product are, for instance, less than 25 cm through usually more than 1 cm, preferably in the range 5 to 15 cm. The web from which the product is cut is usually at least 25 cm wide, for instance at least 1 m wide. Two or more parallel product strips may be cut from the web, for instance at least four or more strips may be cut. The product roll usually comprises a length of substrate at least 2 m, preferably at least 5 m, for instance up to 10 m. The cross direction severance of the laminate to form the desired product lengths and subsequent reeling are usually carried out in-line with the die-cutting process.

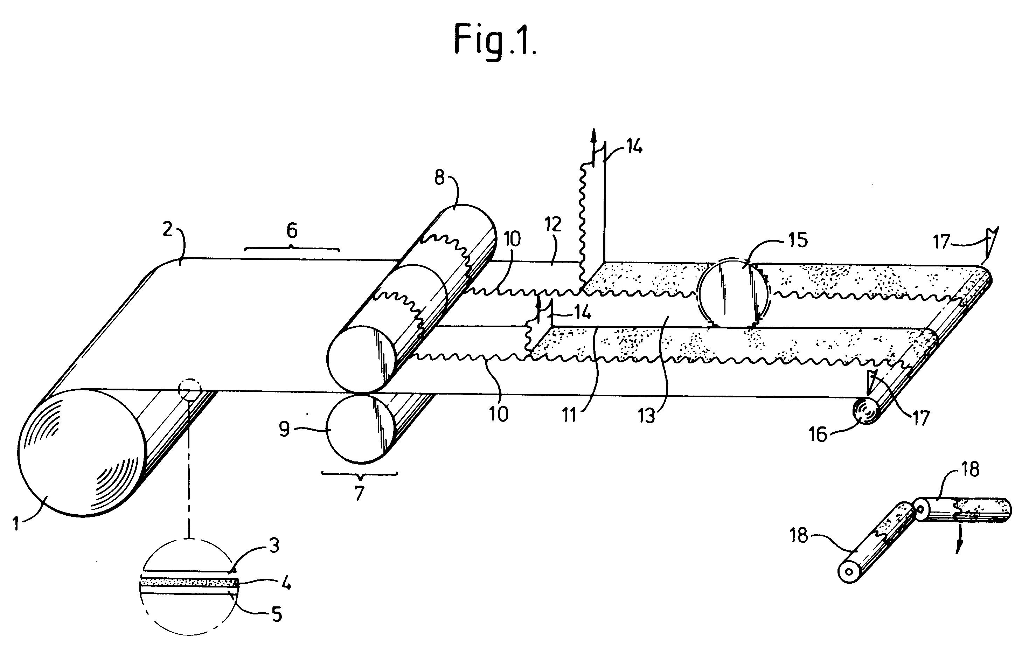

Figure 1 shows a schematic diagram of one preferred aspect of the process of the invention.

As shown in figure 1 a reel 1 comprising a continuous web 2 consisting of a laminate of a sheet substrate 3, carrying on one surface a pressure-sensitive adhesive 4 which is in turn covered by a release sheet 5 is unreeled and subjected to various operations. At printing station 6 the surface of the substrate 3 opposite to the pressure-sensitive adhesive coating is printed by, for instance, gravure, letter press or rotary screen printing. The printing station 6 may include a drying sub-station.

In line with the printing station 6 is a cutting station generally designated as 7, where the laminate is subjected to the cutting operation. In the cutting station there is provided a die cutter 8 which bears against a cylinder 9. The die cutter 8 cuts through the top, substrate layer only, to provide a non-linear cut 10. The die cutter also cuts a straight cut in the machine direction along the centre of the web at 11, again through the substrate layer but not the release sheet. The non-linear die cut 10 splits each half of the laminate into a waste portion 12 and a product strip 13. In the embodiment of the invention shown the waste strip 12 is removed from the laminate in the direction of arrow 14, prior to subsequent winding operations.

The web is subjected to a perforating step, in which a perforating knife 15 cuts through the release sheet along line 11. The parallel strips still attached via the perforated release sheet are then piece wound to form rolls 16, which are severed by a knife 17 at the desired length. The product roll is then snapped in two at the perforations to form the final product rolls 18.

## Claims

1. A process in which a continuous web, comprising a laminate of a) a sheet substrate carrying on one surface a coating of pressure-sensitive adhesive and b) a release sheet covering the adhesive coating, is subjected to a cutting operation in which the substrate is cut through with a die without cutting through the underlying release sheet, to form a product strip in which the sheet substrate and the release sheet are continuous in the machine direction, characterised in that surface of the sheet material opposite to the adhesive surface carries a decorative pattern and in which the border of the strip which is cut in the cutting operation is non-rectilinear and is in register with the boundary of the decorative pattern provided on the sheet substrate and in that after the die cutting step the laminated strip is severed in the cross direction through its entire thickness and reeled off to form product rolls.

2. A process according to claim 1 in which the cutting operation divides the sheet material into waste and desired material, each being continuous in the machine direction, and in which after the cutting operation and before the cross direction severing the waste material is removed from the release paper to be discarded.

3. A process according to claim 1 or 2 in which the decorative printing is provided in an in-line processing step prior to the cutting station.

4. A process according to any preceding claim in which the decorative pattern which is applied comprises a foamable composition and the process includes the step of subjecting the web carrying the foamable material to a curing step in which the foamable material is caused to foam and the curing step is either before or after the cutting operation.

5. A process according to any preceding claim in which the sheet material comprises paper, polyvinyl chloride-based material or polyester-based material.

6. A process according to any preceding claim in which the cutting operation provides at least two of the continuous product strips and in which subsequent to the cutting operation the continuous laminated web is separated into individual product strips by splitting the laminate in the machine direction.

7. A process according to claim 6 in which the laminate is split in two steps in the first of which the sheet material is cut through without cutting the release sheet and in the second of which the release sheet is cut in a separate, perforating operation.

8. A process according to claim 6 in which the laminate is perforated through its entire thickness.

9. A process according to claim 7 or 8 in which the reeled product rolls comprise parallel strips and in which the strips are separated by snapping the perforations of the product roll.

10. A process according to any preceding claim in which the product strips are at least 5m long.

## Patentansprüche

1. Verfahren, in dem eine fortlaufende Bahn, die ein Laminat aus
a) einem Foliensubstrat, welches auf einer Oberfläche eine Beschichtung eines druckempfindlichen Klebstoffes trägt, und
b) einer abziehbaren Folie, welche die Klebstoff-Beschichtung bedeckt,
umfaßt, einem Schneidevorgang unterworfen wird, bei dem das Substrat mit einem Werkzeug durchschnitten wird, ohne daß die darunterliegende abziehbare Folie durchschnitten wird, um einen Produktstreifen zu erzeugen, bei dem das Foliensubstrat und die abziehbare Folie in Maschinenrichtung fortlaufend sind, dadurch gekennzeichnet, daß
die zur Klebstoffoberfäche entgegengesetzte Oberfläche des Folienmaterials ein dekoratives Muster trägt und der Rand des Streifens, der bei dem Schneidevorgang geschnitten wird, nicht geradlinig verläuft und sich mit der Umrandung des dekorativen Musters, mit dem das Foliensubstrat versehen ist, in Deckung befindet, und dadurch, daß nach dem Schneidevorgang durch das Werkzeug der laminierte Streifen in seiner gesamten Stärke in Querrichtung zerteilt wird und abgewickelt, um Produktrollen zu erzeugen.

2. Verfahren nach Anspruch 1, worin der Schneidevorgang das Folienmaterial in Abfall und gewünschtes Material trennt, jeweils fortlaufend in Maschinenrichtung, und worin nach dem Schneidevorgang und vor der Zerteilung in Querrichtung das Abfallmaterial von dem abziehbaren Papier entfernt wird, um verworfen zu werden.

3. Verfahren nach Anspruch 1 oder 2, worin der dekorative Druck in einem in den Arbeitsfluß eingebauten Bearbeitungsschritt vor der Schneidestation erfolgt.

4. Verfahren nach irgendeinem der vorhergehenden Ansprüche, worin das dekorative Muster, das aufgebracht wird, eine schäumbare Zusammensetzung umfaßt, und das Verfahren den Schritt einschließt, in dem die Bahn, die das schäumbare Material trägt, einem Härtungsschritt unterworfen wird, in dem das schäumbare Material zum Schäumen gebracht wird, und der Härtungsschritt entweder vor oder nach dem Schneidevorgang stattfindet.

5. Verfahren nach irgendeinem der vorhergehenden Ansprüche, worin das Folienmaterial Papier, Material auf Polyvinylchlorid-Basis oder Material auf Polyester-Basis umfaßt.

6. Verfahren nach irgendeinem der vorhergehenden Ansprüche, worin der Schneidevorgang mindestens zwei fortlaufende Produktstreifen erzeugt und worin die fortlaufende laminierte Bahn nach dem Schneidevorgang durch Teilung des Laminats in Maschinenrichtung in einzelne Produktstreifen getrennt wird.

7. Verfahren nach Anspruch 6, worin das Laminat in zwei Schritten geteilt wird, wobei im ersten das Folienmaterial durchschnitten wird, ohne daß die abziehbare Folie geschnitten wird, und im zweiten die abziehbare Folie in einem gesonderten Perforierungsvorgang geschnitten wird.

8. Verfahren nach Anspruch 6, worin das Laminat in seiner gesamten Stärke perforiert wird.

9. Verfahren nach Anspruch 7 oder 8, worin die aufgewickelten Produktrollen parallele Streifen umfassen und worin die Streifen getrennt werden, indem die Perforationen der Produktrolle durchgerissen werden.

10. Verfahren nach irgendeinem der vorhergehenden Ansprüche, worin die Produktstreifen mindestens 5 m lang sind.

## Revendications

1. Procédé dans lequel une nappe continue, comprenant un stratifié de a) un substrat en feuille portant sur une surface un revêtement d'adhésif sensible à la pression et b) une feuille de séparation qui recouvre le revêtement d'adhésif, est soumise à une opération de découpage dans laquelle le substrat est découpé au moyen d'un emporte-pièce sans découpage de la feuille de séparation sous-jacente, pour former une bande de produit dans laquelle le substrat en feuille et la feuille de séparation sont continus dans le sens machine, caractérisé en ce que la surface du matériau en feuille opposée à la surface adhésive porte un motif décoratif et la bordure de la bande qui est découpée dans l'opération de découpage n'est pas rectiligne et coïncide avec la limite du motif décoratif prévu sur le substrat en feuille et en ce que, après l'étape de découpage à l'emporte-pièce, la bande stratifiée est coupée dans la direction transversale sur toute son épaisseur et bobinée pour former des rouleaux de produit.

2. Procédé selon la revendication 1, dans lequel l'opération de découpage divise le matériau en feuille en déchets et en matériau voulu, chacun étant continu dans le sens machine, et dans lequel, après l'opération de découpage et avant l'opération de coupe dans la direction transversale, les déchets sont retirés du papier de séparation pour être jetés.

3. Procédé selon la revendication 1 ou 2, dans lequel l'impression décorative est formée dans une étape de procédé en ligne avant le poste de découpage.

4. Procédé selon l'une quelconque des revendications précédentes, dans lequel le motif décoratif qui est appliqué comprend une composition pouvant être transformée en mousse et le procédé comprend l'étape de soumission de la nappe qui porte le matériau pouvant être transformé en mousse à une étape de traitement dans laquelle le matériau pouvant être transformé en mousse est amené à mousser, et l'étape de traitement est antérieure ou postérieure à l'opération de découpage.

5. Procédé selon l'une quelconque des revendications précédentes, dans lequel le matériau en feuille comprend du papier, un matériau à base de poly(chlorure de vinyle) ou un matériau à base de polyester.

6. Procédé selon l'une quelconque des revendications précédentes, dans lequel l'opération de découpage produit au moins deux des bandes de produit continues et dans lequel, après l'opération de découpage, la nappe stratifiée continue est séparée en bandes de produit individuelles par fendage du stratifié dans le sens machine.

7. Procédé selon la revendication 6, dans lequel le stratifié est fendu en deux étapes dans la première desquelles le matériau en feuille est découpé sans découpage de la feuille de séparation et dans la seconde desquelles la feuille de séparation est découpée dans une opération de perforation séparée.

8. Procédé selon la revendication 6, dans lequel le stratifié est perforé sur toute son épaisseur.

9. Procédé selon la revendication 7 ou 8, dans lequel les rouleaux de produit bobiné comprennent des bandes parallèles et dans lequel les bandes sont séparées par rupture des perforations du rouleau de produit.

10. Procédé selon l'une quelconque des revendications précédentes, dans lequel les bandes de produit sont longues d'au moins 5 m.
